# FASCICULE DE BREVET EUROPEEN

(11) **EP 0 469 972 B1**
(45) Date de publication et mention de la délivrance du brevet: **30.11.1994**
(21) Numéro de dépôt: 91402085.4
(22) Date de dépôt: 25.07.1991
(51) Int. Cl.: A21B 5/03, B05C 11/06

(54) **Dispositif d'étalement d'une pâte coulante, telle qu'une pâte alimentaire crue, sur une face horizontale, telle qu'une face de cuisson**
Vorrichtung zum Bedecken einer horizontalen Oberfläche, wie eines Backbleches mit einem fliessfähigen Teig, insbesondere eines ungekochten essbaren Teiges
Device for spreading a flowable paste, such as an edible paste on a horizontal surface, such as a cooking surface

(30) Priorité: 01.08.1990 FR 9009830
(43) Date de publication de la demande: 05.02.1992
(73) Titulaire: Balpe, Michel, F-56320 Le Faouet (FR)
(72) Inventeur: Balpe, Michel, F-56320 Le Faouet (FR)
(74) Mandataire: Martin, Jean-Jacques

(56) Documents cités:
- EP-A- 0 015 194
- FR-A- 1 333 875
- US-A- 4 510 176

## Description

La présente invention concerne un dispositif d'étalement d'une pâte coulante, telle qu'une pâte alimentaire crue, sur une face horizontale, telle qu'une face de cuisson, à partir d'un emplacement limité de dépôt de cette pâte sur cette face.

Elle s'intéresse notamment, mais non exclusivement, à l'étalement d'une pâte plus ou moins liquide du type pâte à crêpe ou à galette, sur une face horizontale de cuisson plane ou non, munie ou démunie de rebord apte à limiter l'étalement de la pâte et par conséquent à communiquer au produits obtenu par cuisson de celle-ci une forme parfaitement déterminée, que cette face de cuisson soit fixe ou qu'elle soit mobile, par exemple sous forme intégrée a un carrousel ou sous forme d'une face d'un transporteur sans fin.

Actuellement, cet étalement est le plus souvent effectué à la main, au moyen d'une lame que l'on place au contact de la pâte déposée en un emplacement limité de la face de cuisson, au moyen d'un dispositif doseur ou à la louche, et que l'on déplace ensuite rapidement, en des mouvements tournants, à proximité immédiate de la face de cuisson pour répandre la pâte sur celle-ci, sur une épaisseur sensiblement constante.

Ce mode d'étalement nécessite une grande dextérité si l'on veut communiquer à la pâte une épaisseur sensiblement constante sur la plaque de cuisson et si l'on veut que le produit obtenu par cuisson de cette pâte présente un contour bien déterminé, lorsque ce contour ne résulte pas de la présence d'un rebord sur la plaque de cuisson ; cette exigence de grande dextérité est d'autant plus marquée que l'étalement doit être rapide, la plaque de cuisson étant généralement déjà portée à une température propre à provoquer une prise de la pâte lorsque celle-ci est déposée sur elle. En outre, ce mode d'étalement implique un contact entre la lame utilisée à cet effet, tenue à la main, et la pâte, ce qui peut entraîner dans la fabrication des produits un manque d'hygiène, critique dans le domaine de l'industrie alimentaire.

Certaines machines automatiques de fabrication d'un produit alimentaire à partir de pâte crue, comportant des faces de cuisson se déplaçant suivant une trajectoire prédéterminée, comportent des dispositifs réalisant à la fois le dépôt de pâte et son étalement sur les faces de cuisson, lesquels dispositifs comportent un rouleau baignant dans la pâte crue, coulante, de façon à s'en couvrir et déposant cette pâte sur les faces de cuisson en un point déterminé de la trajectoire de ces dernières ; ces dispositifs ne donnent satisfaction qu'en relation avec des pâtes de consistance bien déterminée à l'état cru, et ne peuvent être associés qu'à des types bien déterminés de machines automatiques de cuisson.

Le but de la présente invention est de proposer un dispositif d'étalement remédiant a ces inconvénient.

A cet effet, la présente invention propose un dispositif d'étalement du type indiqué en préambule, caractérisé en ce qu'il comporte :
- une rampe horizontale disposée au-dessus de ladite face, et notamment dudit emplacement limité, et présentant une pluralité d'orifices de projection de gaz ou mélange gazeux sous pression, débouchant vers ladite face,
- une source de gaz ou mélange gazeux sous pression, raccordée à ladite rampe,
- des moyens de guidage de ladite rampe à la rotation autour d'un axe vertical passant par ledit emplacement limité ou a proximité immédiate de celui-ci,
- des moyens d'entraînement de ladite rampe à la rotation autour dudit axe vertical.

On conçoit aisément que, si l'on considère à titre d'exemple non limitatif une application à l'industrie alimentaire, on puisse associer un tel dispositif d'étalement à tout type de face de cuisson, présentant l'une quelconque des caractéristiques énumérées en préambule, et ceci avec la même efficacité, aussi bien en termes de rapidité de l'étalement qu'en termes de précision quant à l'épaisseur et au contour de la pâte sur la face de cuisson. Ces avantages se retrouvent dans tout type d'industrie.

On remarque en outre que, en l'absence de contact entre la rampe et la pâte et dès lors que l'on choisit de façon appropriée le gaz ou mélange gazeux sous pression projeté par cette rampe, par exemple de l'air comprimé purifié, le dispositif d'étalement selon l'invention offre toute garantie d'hygiène lorsqu'il est utilisé dans l'industrie alimentaire.

Naturellement, pour des raisons d'équilibre de la rampe en rotation, on préfère que cette rampe soit symétrique par rapport audit axe vertical.

Diverses orientations peuvent être communiquées aux orifices de projection de gaz ou mélange gazeux sous pression et, par exemple, au moins certains desdits orifices peuvent déboucher verticalement vers ladite face, de même qu'au moins certains de ces orifices peuvent déboucher obliquement vers ladite face, par exemple à environ 45° par rapport à celle-ci, c'est-à-dire à environ 45° par rapport à la verticale en référence à une direction circonférentielle ; on préfère toutefois que les orifices de projection de gaz ou mélange gazeux soient orientés à moins de 45° environ, et même à moins de 20° environ, par rapport à la verticale, en référence à une direction circonférentielle.

Lorsqu'on prévoit ainsi que les orifices de projection de gaz ou mélange gazeux sous pression débouchent obliquement vers ladite face, on peut prévoir qu'ils soient orientés dans des sens circonférentiels différents, en référence audit axe vertical, mais, de préférence, on prévoit qu'ils soient orientés dans un même sens circonférentiel déterminé, en référence à cet axe ; alors, les moyens d'entraînement de la rampe à la rotation autour dudit axe vertical peuvent être constitués par ces orifices de projection de gaz ou mélange gazeux sous pression, provoquant par réaction l'entraînement de la rampe à la rotation.

Cependant, quelle que soit l'orientation des orifices de projection de gaz ou mélange gazeux sous pression, par rapport à ladite face, on peut également prévoir que ladite rampe comporte en outre au moins un orifice supplémentaire de projection de gaz ou mélange gazeux sous pression débouchant horizontalement dans un sens circonférentiel déterminé, en référence audit axe vertical, de préférence aussi loin que possible de ce dernier ; les moyens d'entraînement de la rampe à la rotation autour dudit axe vertical comportent alors cet orifice supplémentaire au nombre d'au moins un qui, s'il est par ailleurs prévu que des orifices de projection de gaz ou mélange gazeux sous pression débouchent obliquement vers ladite face en étant orientés dans un même sens circonférentiel, débouche horizontalement de préférence dans ce sens, bien qu'il puisse également en être autrement. Naturellement, lorsque la rampe est symétrique par rapport audit axe vertical, comme il est préféré, elle comporte de préférence deux desdits orifices supplémentaires, alors mutuellement symétriques par rapport à cet axe et débouchant dans le même sens circonférentiel prédéterminé en référence à cet axe.

Naturellement, on peut également prévoir que les moyens d'entraînement de la rampe à la rotation autour dudit axe vertical comportent un moteur de tout type connu, notamment électrique, hydraulique ou pneumatique, lié cinématiquement à la rampe.

Avantageusement, les moyens de guidage de la rampe à la rotation autour dudit axe vertical comportent un tube coaxial de raccordement de cette rampe à la source de gaz ou mélange gazeux sous pression ; ce tube peut simplement servir de support et de guide de la rampe à la rotation autour dudit axe vertical, conjointement avec des paliers convenablement disposés, mais, lorsque les moyens d'entraînement de la rampe à la rotation autour dudit axe vertical comportent un moteur lié cinématiquement à la rampe, ce tube peut assurer la liaison cinématique entre ce moteur et la rampe.

Le dispositif selon l'invention peut être indépendant de tout dispositif de dépôt de pâte, notamment lorsqu'il est associé à une machine comportant, à l'état juxtaposé, un poste de dépôt de pâte, par exemple au moyen d'un dispositif doseur de tout type connu, et un poste d'étalement muni du dispositif selon l'invention, avec passage successif d'une face horizontale au poste de dépôt de pâte, en un emplacement limité de cette face, et au poste d'étalement de la pâte ainsi déposée précédemment.

On peut cependant associer des moyens de dépôt de pâte au dispositif d'étalement selon l'invention, en prévoyant que ce dernier comporte des moyens de dépôt de pâte débouchant vers ladite face à proximité immédiate dudit axe vertical, à un niveau supérieur à celui de ladite rampe.

De tels moyens de dépôt de pâte pourraient déboucher vers ladite face suivant ledit axe vertical mais il est également admissible, et plus commode à réaliser techniquement, de les faire déboucher de façon légèrement décalée par rapport à cet axe vertical, par exemple en les faisant déboucher vers ladite face de part et d'autre de celui-ci.

Lorsque des moyens de dépôt de pâte sont ainsi associés au dispositif selon l'invention, celui-ci peut également comporter des moyens pour commander les moyens d'entraînement de ladite rampe à la rotation autour dudit axe vertical, ladite source de gaz ou mélange gazeux sous pression et les moyens de dépôt de pâte selon la succession des étapes consistant à :
- déposer de la pâte sur ledit emplacement alors que la rampe est immobile et laisse dégagé l'aplomb du débouché des moyens de dépôt de pâte vers ladite face et que la projection de gaz ou mélange gazeux sous pression est interrompue,
- provoquer la rotation de ladite rampe autour dudit axe vertical et la projection de gaz ou mélange gazeux sous pression,
- interrompre la rotation de ladite rampe autour dudit axe vertical et la projection de gaz ou mélange gazeux sous pression.

Avantageusement, pour faciliter l'étalement centrifuge de la pâte ainsi déposée centralement sur ladite face, on prévoit qu'au moins certains des orifices de projection de gaz ou de mélange gazeux sous pression soient inclinés par rapport à la verticale dans le sens d'un éloignement, vers le bas, vis-à-vis dudit axe vertical, et ceci de préférence d'un angle au plus égal à 15° environ par rapport à celui-ci.

D'autres caractéristiques et avantages d'un dispositif selon l'invention ressortiront de la description ci-dessous, relative à deux exemples non limitatifs de réalisation, ainsi que des dessins annexés qui font partie intégrante de cette description.
- La figure 1 montre une vue, pour l'essentiel en élévation latérale et pour partie en coupe par un plan vertical incluant l'axe de rotation de la rampe, d'un premier exemple de dispositif selon l'invention.
- La figure 2 montre une vue de ce dispositif en coupe par un plan horizontal repéré en II-II à la figure 1.
- La figure 3 montre un détail de ce dispositif, en coupe par un plan vertical repéré en III-III à la figure 2.
- La figure 4 montre, en une vue analogue à celle de la figure 1, un deuxième exemple de réalisation d'un dispositif selon l'invention.
- La figure 5 montre une vue de ce dispositif en coupe par un plan horizontal repéré en V-V à la figure 4.

Dans l'un et l'autre de ces exemples, le dispositif selon l'invention est associé à une plaque individuelle 1 de cuisson d'une crêpe, présentant une face supérieure 2 plane, horizontale, de plan circulaire, éventuellement munie d'un rebord périphérique qui forme une saillie sur cette face supérieure 2 et présente la forme d'une couronne annulaire de révolution autour d'un axe vertical 4 passant par le centre de celle-ci, mais il est bien entendu qu'un dispositif selon l'invention pourrait être associé à tout autre type de face de cuisson présentant, comme la face 2, une orientation générale horizontale, que cette face de cuisson soit fixe par rapport à un bâti de la machine portant également le dispositif selon l'invention, ou qu'elle soit mobile par rapport à ce bâti. Il doit également être entendu que le dispositif selon l'invention pourrait être utilisé pour l'étalement d'une pâte coulante de toute nature, sur toute face d'orientation générale horizontale, dans tout domaine technique.

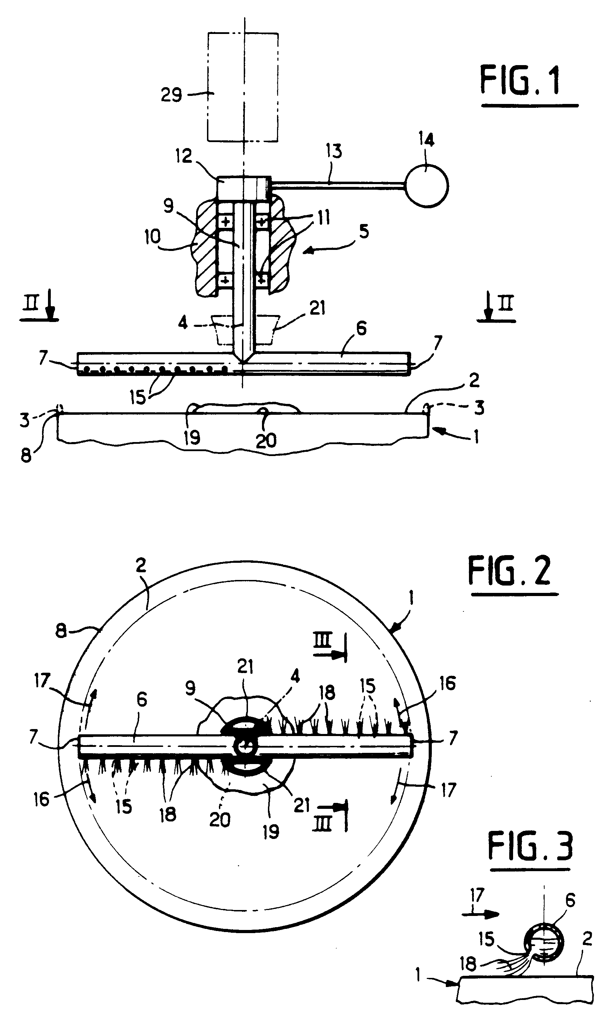

Dans son exemple de réalisation illustré aux figures 1 à 3, le dispositif selon l'invention 5 comporte une rampe tubulaire 6 de forme générale rectiligne, disposée suivant une orientation horizontale, au-dessus de la face supérieure 2 de la plaque 1, à une distance de cette face 2 pouvant aller de quelques millimètres à quelques centimètres, cette distance étant en tout cas supérieure à l'épaisseur d'un produit à réaliser par cuisson sur la face 2.

La rampe 6 est disposée symétriquement par rapport à l'axe vertical 4, qu'elle coupe, et présente notamment dans le sens d'un éloignement par rapport à celui-ci deux extrémités fermées 7, situées approximativement à l'aplomb du bord circulaire 8 de la face 2 ou du rebord périphérique 3 de celle-ci, éventuellement en léger retrait vers l'axe 4 par rapport à cet aplomb comme on l'a illustré. Autour de son intersection avec l'axe 4, la rampe 6 se raccorde de façon solidaire à un tube vertical 9 présentant une forme générale de révolution autour de l'axe 4 et qui forme une saillie au-dessus de la rampe 6.

Ce tube 9 est guidé à la rotation autour de l'axe 4, sans possibilité de déplacement perpendiculairement à celui-ci ou suivant celui-ci, dans un bâti 10 de la machine par l'intermédiaire de roulements 11 ou de tout autre type de palier et, au-dessus de ces roulements 11, il se raccorde par l'intermédiaire d'un joint tournant 12 à une conduite 13 raccordant ce joint tournant 12 à une source 14 de gaz ou mélange gazeux sous pression, tel que de l'air comprimé purifié qui, ainsi, est acheminé à la rampe 6 par l'intermédiaire de la conduite 13, du joint tournant 12 et du tube 9, les uns et les autres étanches.

La rampe 6 est elle-même étanche, si ce n'est qu'elle est percée d'une pluralité d'orifices 15 de projection de gaz ou mélange gazeux sous pression, débouchant vers le bas, c'est-à-dire vers la face 2, obliquement par rapport à celle-ci et par exemple en formant un angle de l'ordre de 45° par rapport à celle-ci, suivant une direction circonférentielle 17, 16, comme le montre la figure 3 ; cette valeur ne constitue toutefois qu'un exemple non limitatif.

Les orifices 15 de projection de gaz ou mélange gazeux sont ainsi répartis, en grand nombre, de l'axe 4 à chacune des extrémités 7 de la rampe 6, de façon symétrique par rapport à l'axe 4 ou, de préférence, dissymétrique par rapport à cet axe 4 de telle sorte que les trajectoires circulaires qu'accomplissent les orifices 15 disposés respectivement de part et d'autre de celui-ci lors d'une rotation de la rampe 6 autour de cet axe 4 s'imbriquent mutuellement, concentriquement, au lieu de coïncider mutuellement.

Ces orifices 15 de projection de gaz ou mélange gazeux, débouchant ainsi obliquement vers la face 2, sont en outre tous orientés dans un même sens circonférentiel déterminé 16 en référence a l'axe 4 si bien que, lorsque du gaz ou mélange gazeux sous pression en provenance de la source 14 en sort, ce gaz ou mélange gazeux provoque par réaction une rotation de la rampe 6 autour de l'axe 4 dans le sens circonférentiel 17 opposé au sens 16, le tube 9 étant à cet effet monté à la rotation libre autour de l'axe 4 par rapport au bâti 10 de la machine, par l'intermédiaire des roulements 11 ; le gaz ou mélange gazeux sortant ainsi de la rampe 6 par les orifices 15 de celle-ci a été schématisé aux figures 2 et 3 par des faisceaux divergents 18 dont chacun correspond à un orifice 15 de projection de gaz ou mélange gazeux, cette forme en faisceau divergent 18 résultant d'une conformation appropriée des orifices 15, aisément déterminable à cet effet par un Homme du métier ; du fait de cette forme en faisceau divergent 18, le gaz ou mélange gazeux sortant des orifices 15 assure non seulement la propulsion de la rampe 6 à la rotation autour de l'axe 4, mais également, au cours de cette rotation, un balayage de l'intégralité de la face supérieure 2 de la plaque 1, ce qui provoque l'étalement, sur celle-ci, d'une pâte coulante 19 initialement déposée en un emplacement limité correspondant à une zone centrale 20 de cette face 2, soit à la main, soit au moyen d'un dispositif de dosage et de dépôt de pâte, de préférence associé au dispositif selon l'invention.

Ce dispositif de dosage et de dépôt de pâte peut être de tout type connu, débouchant vers la zone centrale 20 aussi près que possible de l'axe 4 et, éventuellement, coaxialement au tube 9 selon un mode de mise en oeuvre de l'invention non illustré mais aisément concevable par un Homme du métier. Cependant, de façon préféréé notamment pour des raisons de simplicité, ce dispositif de dosage et de dépôt de pâte présente respectivement de part et d'autre de l'axe 4 deux bouches 21 de sortie de pâte, débouchant vers le bas dans des positions mutuellement symétriques par rapport à l'axe 4, respectivement de part et d'autre du tube 9, à un niveau légèrement supérieur, par exemple d'une valeur de l'ordre de quelques millimètres, à celui de la rampe 6 afin de ne pas entraver la rotation de celle-ci ; les bouches de sortie 21 sont ainsi disposées respectivement de part et d'autre de l'aplomb de la rampe 6, lorsque celles-ci occupent une orientation privilégiée, autour de l'axe 4, dans laquelle on l'amène à l'arrêt, et présentent en plan des formes telles que les doses de pâte qu'elles laissent sortir simultanément vers le bas, c'est-à-dire vers la face supérieure 2 de la plaque 1, se rejoignent sous la forme approximative d'un disque dans la zone centrale 20 de cette face, comme on l'a schématisé en 19 à la figure 2.

Le dispositif de dosage et de dépôt de pâte peut être par ailleurs de conception traditionnelle, et n'a de ce fait pas été illustré.

Lorsque le dépôt de pâte a été ainsi effectué dans la zone 20 de la face 2 au moyen du dispositif de dosage et de dépôt de pâte, alors que la rampe 6 est à l'arrêt notamment en l'absence de projection de gaz ou mélange gazeux par les orifices 15, la rampe 6 est alimentée en gaz ou mélange gazeux sous pression en provenance de la source 14, ce qui provoque simultanément sa rotation et l'étalement de la pâte par action des faisceaux divergents 18, la pâte migrant ainsi progressivement jusqu'à proximité immédiate du bord circulaire 8 de la face 2 ou jusqu'au rebord périphérique 3 de celle-ci, avec une épaisseur uniforme dès lors que les orifices 15 sont prévus en un nombre suffisamment grand et que les faisceaux divergents 18 se rejoignent sans discontinuité à une distance de la face supérieure 2 de la plaque 1 correspondant au moins à l'épaisseur du produit à réaliser par cuisson de la pâte sur cette face.

Après étalement, l'alimentation de la rampe 6 en gaz ou mélange gazeux sous pression est interrompue et la rampe 6 ramenée dans son orientation privilégiée illustrée à la figure 2, et on peut pratiquer un nouveau dépôt de pâte sur la zone centrale 20 de la face 2 dès que le produit cuit en a été ôté.

A titre d'exemple non limitatif, on a obtenu de bons résultats aux essais en donnant aux orifices 15 de projection de gaz ou mélange gazeux, orientés approximativement à 45° par rapport à la face supérieure 2 de la plaque de cuisson 1, vers l'arrière en référence au sens 17 de rotation de la rampe 6, une section circulaire d'un diamètre de l'ordre de 0,7 mm et en fournissant à la rampe 6 de l'air comprimé purifié, à une pression de l'ordre de 8.10⁵ Pa ; toutefois, ces chiffres ne sont qu'indiqués qu'à titre d'exemple non limitatif.

Toutefois, l'utilisation des mêmes orifices 15 de projection de gaz ou mélange gazeux pour assurer à la fois l'entraînement de la rampe 6 à la rotation autour de l'axe 4 et l'étalement de la pâte lors de cette rotation peut poser des problèmes de choix de la pression du gaz ou mélange gazeux fourni par la source 14, en fonction de la fluidité de la pâte à étaler.

Pour remédier à cet inconvénient, on peut dissocier l'entraînement de la rampe 6 à la rotation autour de l'axe 4 et l'effet d'étalement de la pâte par le gaz ou mélange gazeux sous pression projeté par les orifices 15.

Ainsi, en conservant la conception de la rampe 6 qui a été décrite en référence aux figures 1 à 3, on peut prévoir que ce soit un moteur 29 électrique, ou pneumatique, ou hydraulique, lié cinématiquement à la rampe 6 par exemple par l'intermédiaire du tube 9, qui assure l'entraînement de cette rampe 6 à la rotation dans le sens 17, ou même éventuellement dans le sens 16, le sens de rotation étant alors indépendant du sens de projection du gaz ou mélange gazeux par les orifices 15 ; l'orientation de ces derniers peut alors être choisie indépendamment de tout souci de leur faire jouer un rôle dans l'entrainement de la rampe 6 et, en particulier, ils peuvent ainsi être tournés vers l'avant en référence au sens circonférentiel de rotation de la rampe 6 sous l'action du moteur 29 de façon à pousser la pâte en avant de la rampe 6, et notamment former par rapport à la verticale, vers l'avant, un angle d'au plus 20° environ, et de préférence de l'ordre de 15° environ, ces chiffres étant indiqués à titre d'exemple non limitatif.

On peut cependant également dissocier l'entraînement de la rampe à la rotation et l'étalement de la pâte par projection de gaz ou mélange gazeux sous pression, tout en utilisant pour remplir les deux fonctions ce gaz ou mélange gazeux sous pression.

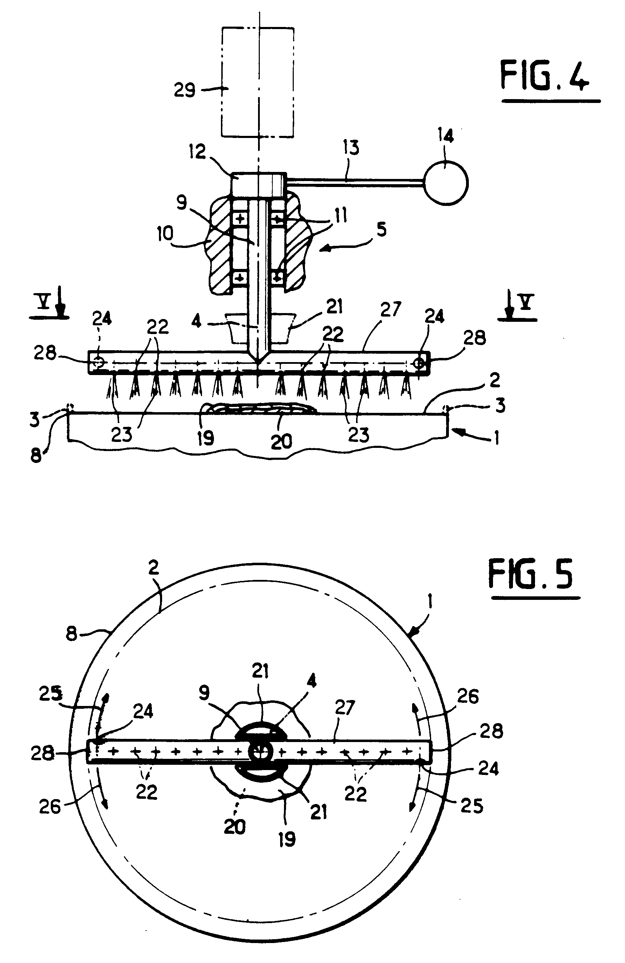

C'est précisément le cas dans l'exemple de réalisation de l'invention illustré aux figures 4 et 5, auxquelles on se réfèrera à présent.

On retrouve dans ce cas le tube 9 que les roulements 11 guident à la rotation autour de l'axe 4, sans autre possibilité de déplacement, par rapport au bâti 10 de la machine et qui se raccorde par un joint tournant 12, au-dessus des roulements 11, à une conduite 13 de liaison avec une source 14 de gaz ou mélange gazeux sous pression, tel que de l'air com primé purifié. En dessous des roulements 11, mais néanmoins au-dessus de la face supérieure 2 de la plaque 1, l'arbre 4 présente une extrémité inférieure par laquelle il porte de façon solidaire une rampe tubulaire 27 présentant la même forme générale rectiligne, symétrique par rapport à l'axe 4, la même orientation horizontale et le même positionnement, par rapport à la face supérieure 2 de la plaque 1, que la rampe 6 de l'exemple de réalisation d'un dispositif selon l'invention décrit en référence aux figures 1 à 3 ; en particulier, la rampe 27 présente deux extrémités libres 28 symétriques l'une de l'autre par rapport à l'axe 4 et situées approximativement à l'aplomb du bord circulaire 8 de la face supérieure 2 de la plaque 1 ou du rebord périphérique 3 de celle-ci, et par exemple légèrement en retrait vers l'axe 4 par rapport à cet aplomb comme on l'a illustré.

Comme la rampe 6, la rampe 27 présente un grand nombre d'orifices 22 de projection de gaz ou mélange gazeux sous pression, lesquels sont répartis de l'axe 4 à chacune de ses extrémités 28, symétriquement par rapport à l'axe 4 ou, de préférence, dissymétriquement par rapport à celui-ci afin que les trajectoires circulaires qu'accomplissent les orifices 22 situés respectivement de part et d'autre de celui-ci lors d'une rotation de la rampe 6 autour de cet axe 4 s'imbriquent mutuellement concentriquement.

Toutefois, à la différence des orifices 15 de la rampe 6, les orifices 22 sont orientés verticalement vers le bas, c'est-à-dire vers la face supérieure 2 de la plaque 1, pour émettre vers cette face 2 des faisceaux divergents 23 de gaz ou mélange gazeux sous pression, propres à se rejoindre à une distance de la face supérieure 2 de la plaque 1, au-dessus de cette face 2, supérieure à l'épaisseur maximale d'un produit à réaliser de façon a assurer l'étalement, sur la totalité de la face supérieure 2 de la plaque 1, d'une dose de pâte 19 déposée à l'état coulant sur une zone centrale 20 de cette face supérieure 2.

Du fait de leur orientation verticale, les orifices 22 sont cependant impropres à assurer l'entraînement de la rampe 27 à la rotation autour de l'axe 4 et, à cet effet, on peut prévoir soit un moteur 29 entraînant le tube 9 à la rotation autour de l'axe 4 comme on l'a décrit en référence aux figures 1 à 3, soit, de préférence, au moins un orifice supplémentaire de projection du gaz ou mélange gazeux sous pression fourni à la rampe 27, et notamment aux orifices 22 de celle-ci par la source 14.

De préférence, comme il est illustré, deux de ces orifices supplémentaires 24 de projection de gaz ou mélange gazeux sous pression sont prévus dans des positions mutuellement symétriques par rapport à l'axe 4, à proximité de l'une et l'autre des extrémités 28, quant à elles fermées, de la rampe 27, et ces deux orifices 24 débouchent sensiblement horizontalement dans un même sens circonférentiel déterminé 25, en référence à l'axe 4, de telle sorte que, par réaction, le gaz ou mélange gazeux sous pression qui s'en échappe provoque une rotation de la rampe 27 dans le sens circonférentiel opposé 26, autour de l'axe 4.

On comprend aisément que, pour une pression déterminée du gaz ou mélange gazeux sous pression fourni à la rampe 27 par la source 14, et pour une section déterminée des orifices 22 projetant ce gaz ou mélange gazeux vers la face supérieure 2 de la plaque 1 et vers la dose de pâte 19 à étaler, on puisse en réglant la section des orifices supplémentaires 24 communiquer à la rampe 20 toute vitesse désirée de rotation dans le sens 26 autour de l'axe 4.

A titre d'exemple non limitatif, on a obtenu de bons résultats aux essais en donnant aux orifices 22 une section circulaire d'un diamètre de l'ordre de 0,7 mm et aux orifices 24 une section circulaire de l'ordre de 2 mm, et en fournissant à la rampe 27 de l'air comprimé purifié sous une pression de l'ordre de 8.10⁵Pa, mais ces chiffres ne constituent qu'un exemple non limitatif.

Comme le dispositif selon l'invention qui a été décrit en référence aux figures 1 à 3, le dispositif qui vient d'être décrit en référence aux figures 4 et 5 peut être dissocié de tout moyen propre à déposer la pâte 19 sur la zone centrale 20 de la face supérieure 2 de la plaque 1, de tels moyens étant soit absents, soit disposés en un poste de travail distinct du poste de travail où se trouve le dispositif selon l'invention ; on peut encore associer ce dispositif à des moyens de dosage et de dépôt de pâte qui, comme on l'a décrit en référence aux figures 1 à 3, peuvent soit déboucher vers le bas coaxialement au tube 9, soit déboucher de façon légèrement désaxée, à proximité immédiate de celui-ci et à un niveau légèrement supérieur à celui de la rampe 27, comme on l'a illustré aux figures 4 et 5 sous forme de deux bouches de sortie 21 disposées de la façon décrite en référence aux figures 1 à 3, respectivement de part et d'autre de l'aplomb d'une position que la rampe 27 occupe lorsqu'elle est arrêtée, c'est-à-dire en l'absence de projection de gaz ou mélange gazeux sous pression par les orifices 24 ou d'entraînement par le moteur 29.

Dans le cas de l'un et l'autre des exemples de réalisation de l'invention qui ont été décrits, et lorsque ce dispositif est associé à des moyens de dosage et de dépôt de pâte 19 sur la zone centrale 20 de la face supérieure 2 de la plaque de cuisson 1, on prévoit de préférence des moyens non représentés, aisément réalisables par un Homme du métier, pour commander l'entraînement de la rampe 6 ou 27 à la rotation autour de l'axe 4, la source 14 de gaz en mélange gazeux sous pression et ces moyens de dosage et de dépôt de pâte selon la succession des étapes consistant à :
- déposer une dose de pâte 19 sur la zone centrale 20 de la face supérieure 2 de la plaque de cuisson 1 alors que la rampe 6 ou 27 est immobile et dégage totalement l'aplomb des bouches de sortie 21 de ces moyens de dosage et de dépôt de pâte, son alimentation en gaz ou mélange gazeux sous pression à partir de la rampe 14 étant interrompue,
- provoquer la rotation de la rampe 6 ou 27 autour de l'axe 4 et la projection de gaz ou mélange gazeux sous pression en provenance de la source 14,
- interrompre cette rotation, en orientant la rampe 6 ou 27 de telle sorte qu'elle dégage à nouveau les bouches de sortie 21 des moyens de dosage et de dépôt de pâte 19, en interrompant également l'alimentation de la rampe 6 ou 27 en gaz ou mélange gazeux sous pression en provenance de la source 14.

L'arrêt de la rampe 6 ou 27 dans une orientation laissant les bouches de sortie 21 des moyens de dosage et de dépôt de pâte dégagées vers le bas peut être obtenu par exemple au moyen d'un taquet d'arrêt, non représenté, venant automatiquement se placer dans la trajectoire de la rampe 6 ou 27 lorsqu'on arrête l'entraînement de cette rampe 6 ou 27 à la rotation autour de l'axe 4, de façon non représentée mais aisement concevable par un Homme du métier.

Naturellement, un tel Homme du métier comprendra aisément que les deux exemples de mise en oeuvre de l'invention qui viennent d'être décrit ne sont nullement limitatifs et que, en particulier, il est possible de combiner ces deux exemples de réalisation notamment en ce qui concerne les orientations des orifices de projection de gaz ou mélange gazeux sous pression vers la face supérieure 2 de la plaque de cuisson 1, la rampe 27 pouvant présenter des orifices de projection de gaz ou mélange gazeux sous pression orientés obliquement par rapport à la face supérieure 2 de la plaque de cuisson 1, dans le sens 25 ou dans le sens 26, de même que certains orifices de projection de gaz ou mélange gazeux de la rampe 6 peuvent être dirigés verticalement vers la face supérieure 2 de la plaque 1. En outre, dans l'un et l'autre de ces exemples de réalisation, on peut prévoir qu'au moins certains orifices 15, 22 de projection de gaz ou mélange gazeux, ou tous ces orifices, soient inclinés par rapport à la verticale dans le sens d'un éloignement, vers le bas, vis-à-vis de l'axe 4 respectif afin de favoriser un étalement centrifuge de la pâte, de façon non illustrée mais aisement compréhensible par un Homme du métier ; ces orifices peuvent ainsi former un angle d'environ 15°, ou de moins de 15°, par rapport à la verticale dans le sens d'un éloignement vis-à-vis de l'axe 4, ce chiffre n'étant indiqué qu'à titre d'exemple non limitatif.

## Revendications

1. Dispositif d'étalement d'une pâte coulante, telle qu'une pâte alimentaire crue, sur une face horizontale (2), telle qu'une face de cuisson (2), à partir d'un emplacement limité (20) de dépôt de cette pâte (19) sur cette face (2), caractérisé en ce qu'il comporte :
- une rampe horizontale (6, 27) disposée au-dessus de ladite face (2) et notamment dudit emplacement limité (20) et présentant une pluralité d'orifices (15, 22) de projection de gaz ou mélange gazeux sous pression, débouchant vers ladite face (2),
- une source (14) de gaz ou mélange gazeux sous pression, raccordée à ladite rampe (6, 27),
- des moyens (9, 10, 11) de guidage de ladite rampe à la rotation autour d'un axe vertical (4) passant par ledit emplacement limité (20) ou à proximité immédiate de celui-ci,
- des moyens (15, 24, 29) d'entraînement de ladite rampe (6, 27) à la rotation autour dudit axe vertical (4).

2. Dispositif selon la revendication 1, caractérisé en ce que ladite rampe (6, 27) est symétrique par rapport audit axe vertical (4).

3. Dispositif selon l'une quelconque des revendications 1 et 2, caractérisé en ce qu'au moins certains (22) desdits orifices de projection de gaz ou mélange gazeux sous pression débouchent verticalement vers ladite face (2).

4. Dispositif selon l'une quelconque des revendications 1 à 3, caractérisé en ce qu'au moins certains orifices (15) de projection de gaz ou mélange gazeux sous pression débouchent obliquement vers ladite face (2).

5. Dispositif selon la revendication 4, caractérisé en ce qu'au moins certains desdits orifices de projection de gaz ou mélange gazeux sous pression débouchant obliquement vers ladite face (2) sont orientés dans le sens d'un éloignement, vers le bas, par rapport audit axe vertical, de préférence d'un angle au plus égal à 15° environ par rapport à celui-ci.

6. Dispositif selon l'une quelconque des revendications 4 et 5, caractérisé en ce qu'au moins certains desdits orifices (15) de projection de gaz ou mélange gazeux sous pression débouchant obliquement vers ladite face (2) sont orientés à environ 45° par rapport à la verticale, au maximum, et de préférence à moins de 20° environ par rapport à la verticale, en référence à une direction circonférentielle (16, 17).

7. Dispositif selon la revendication 6, caractérisé en ce que lesdits orifices (15) de projection de gaz ou mélange gazeux sous pression débouchant obliquement vers ladite face (2) sont orientés dans un sens circonférentiel déterminé (16), en référence audit axe vertical (4).

8. Dispositif selon l'une quelconque des revendications 1 à 7, caractérisé en ce que ladite rampe (27) comporte en outre au moins un orifice (24) de projection de gaz ou mélange gazeux sous pression débouchant horizontalement dans un sens circonférentiel déterminé (25), en référence audit axe vertical (4).

9. Dispositif selon la revendication 8, caractérisé en ce que ledit au moins un orifice (24) de projection de gaz ou mélange gazeux sous pression débouchant horizontalement dans un sens circonférentiel déterminé (25) est aussi éloigné que possible dudit axe vertical (4).

10. Dispositif selon l'une quelconque des revendications 8 et 9, caractérisé en ce que ladite rampe (27) comporte deux desdits orifices (24) de projection de gaz ou mélange gazeux sous pression débouchant horizontalement dans un sens circonférentiel déterminé (25), mutuellement symétriques par rapport audit axe vertical (4) et débouchant dans le même sens circonférentiel déterminé (25) en référence à celui-ci.

11. Dispositif selon l'une quelconque des revendications 7 à 10, caractérisé en ce que les moyens (15, 24, 29) d'entraînement de ladite rampe (6, 27) à la rotation autour dudit axe vertical comportent lesdits orifices (15, 24) de projection de gaz ou mélange gazeux sous pression débouchant dans un sens circonférentiel déterminé (16, 25).

12. Dispositif selon l'une quelconque des revendications 1 à 11, caractérisé en ce que les moyens (15, 24, 29) d'entraînement de ladite rampe (6, 27) à la rotation autour dudit axe vertical comportent un moteur (29) lié cinématiquement à ladite rampe (6, 27).

13. Dispositif selon l'une quelconque des revendications 1 à 12, caractérisé en ce que les moyens (9, 10, 11) de guidage de ladite rampe à la rotation autour dudit axe vertical (4) comportent un tube coaxial (9) de raccordement de ladite rampe (6, 27) à ladite source (14) de gaz ou mélange gazeux sous pression.

14. Dispositif selon l'une quelconque des revendications 1 à 13, caractérisé en ce qu'il comporte des moyens de dépôt de pâte débouchant (21) vers ladite face (2) à proximité immédiate dudit axe vertical (4), à un niveau supérieur à celui de ladite rampe (6, 20).

15. Dispositif selon la revendication 14, caractérisé en ce que les moyens de dépôt de pâte débouchent (21) vers ladite face (2) de part et d'autre dudit axe vertical (4).

16. Dispositif selon l'une quelconque des revendications 14 et 15, caractérisé en ce qu'il comporte des moyens pour commander les moyens d'entraînement (15, 24, 29) de ladite rampe (6, 7) à la rotation autour dudit axe vertical (4), ladite source (14) de gaz ou mélange gazeux sous pression et les moyens de dépôt de pâte selon la succession des étapes consistant à :
- déposer de la pâte (19) sur ledit emplacement (20) alors que la rampe (6, 27) est immobile et laisse dégagé l'aplomb du débouché (21) des moyens de dépôt de pâte vers ladite face (2) et que la projection de gaz ou mélange gazeux sous pression est interrompue,
- provoquer la rotation de ladite rampe (6, 27) autour dudit axe vertical (4) et la projection de gaz ou mélange gazeux sous pression,
- interrompre la rotation de ladite rampe (6, 27) autour dudit axe vertical (4) et la projection de gaz ou mélange gazeux sous pression.

## Claims

1. Device for spreading out a runny batter, such as a raw food batter, on a horizontal surface (2), such as a cooking surface (2), from a limited location (20) at which this batter (19) is deposited on this surface (2), characterized in that it includes:
- a horizontal boom (6, 27) located above the said surface (2) and especially above the said limited location (20) and exhibiting a plurality of orifices (15, 22) for spraying pressurized gas or gaseous mixture, emerging towards the said surface (2),
- a source (14) of pressurized gas or gaseous mixture connected to the said boom (6, 27),
- means (9, 10, 11) for guiding the said boom in rotation about a vertical axis (4) passing through the said limited location (20) or in the immediate vicinity of the latter,
- means (15, 24, 29) for driving the said boom (6, 27) in rotation about the said vertical axis (4).

2. Device according to Claim 1, characterized in that the said boom (6, 27) is symmetric with respect to the said vertical axis (4).

3. Device according to any one of Claims 1 and 2, characterized in that at least some (22) of the said orifices for spraying pressurized gas or gaseous mixture emerge vertically towards the said surface (2).

4. Device according to any one of Claims 1 to 3, characterized in that at least some orifices (15) for spraying pressurized gas or gaseous mixture emerge obliquely towards the said surface (2).

5. Device according to Claim 4, characterized in that at least some of the said orifices for spraying pressurized gas or gaseous mixture emerging obliquely towards the said surface (2) point in the direction of moving away, downwards, with respect to the said vertical axis, preferably at an angle at most equal to approximately 15° with respect to this axis.

6. Device according to any one of Claims 4 and 5, characterized in that at least some of the said orifices (15) for spraying pressurized gas or gaseous mixture emerging obliquely towards the said surface (2) point at approximately 45° with respect to the vertical, at the most, and preferably at less than approximately 20° with respect to the vertical, with reference to a circumferential direction (16, 17).

7. Device according to Claim 6, characterized in that the said orifices (15) for spraying pressurized gas or gaseous mixture emerging obliquely towards the said surface (2) point in a given circumferential direction (16) with reference to the said vertical axis (4).

8. Device according to any one of Claims 1 to 7, characterized in that the said boom (27) further includes at least one orifice (24) for spraying pressurized gas or gaseous mixture emerging horizontally in a given circumferential direction (25), with reference to the said vertical axis (4).

9. Device according to Claim 8, characterized in that the said at least one orifice (24) for spraying pressurized gas or gaseous mixture emerging horizontally in a given circumferential direction (25) is as far as possible from the said vertical axis (4).

10. Device according to any one of Claims 8 and 9, characterized in that the said boom (27) includes two of the said orifices (24) for spraying pressurized gas or gaseous mixture emerging horizontally in a given circumferential direction (25), which are mutually symmetric with respect to the said vertical axis (4) and emerging in the same given circumferential direction (25) with reference to this axis.

11. Device according to any one of Claims 7 to 10, characterized in that the means (15, 24, 29) for driving the said boom (6, 27) in rotation about the said vertical axis include the said orifices (15, 24) for spraying pressurized gas or gaseous mixture emerging in a given circumferential direction (16, 25).

12. Device according to any one of Claims 1 to 11, characterized in that the means (15, 24, 29) for driving the said boom (6, 27) in rotation about the said vertical axis include a motor (29) kinematically linked to the said boom (6, 27).

13. Device according to any one of Claims 1 to 12, characterized in that the means (9, 10, 11) for guiding the said boom in rotation about the said vertical axis (4) include a coaxial tube (9) for connecting the said boom (6, 27) to the said source (14) of pressurized gas or gaseous mixture.

14. Device according to any one of Claims 1 to 13, characterized in that it includes means for depositing batter emerging (21) towards the said surface (2) in the immediate vicinity of the said vertical axis (4) at a higher level than that of the said boom (6, 20).

15. Device according to Claim 14, characterized in that the means for depositing batter emerge (21) towards the said surface (2) on either side of the said vertical axis (4).

16. Device according to any one of Claims 14 and 15, characterized in that it includes means for controlling the means (15, 24, 29) for driving the said boom (6, 7) in rotation about the said vertical axis (4), the said source (14) of pressurized gas or gaseous mixture and the means for depositing batter according to the series of steps consisting in:
- depositing batter (19) on the said location (20) while the boom (6, 27) is immobile and clears out the vertical of the outlet (21) of the means for depositing batter towards the said surface (2) and while the spraying of pressurized gas or gaseous mixture is interrupted,
- causing the said boom (6, 27) to rotate about the said vertical axis (4) and the pressurized gas or gaseous mixture to be sprayed,
- interrupting the rotation of the said boom (6, 27) about the said vertical axis (4) and the spraying of pressurized gas or gaseous mixture.

## Patentansprüche

1. Vorrichtung zum Ausbreiten eines fließenden Teigs wie beispielsweise eines rohen Nahrungsmittelteigs auf einer horizontalen Fläche (2) wie beispielsweise einer Backfläche (2), ausgehend von einem platzmäßig begrenzten Vorrat (20) des Teigs auf der Fläche (2), dadurch gekennzeichnet, daß sie
- eine horizontale Rampe (6, 27), die über der besagten Fläche (2) und dementsprechend dem begrenzten Platz (20) angeordnet ist und mehrere Öffnungen (15, 20) zum Ausstoßen eines Gases oder eines Gasgemisches unter Druck aufweist, die zu der besagten Fläche (2) münden,
- eine Quelle (14) des Gases oder des Gasgemisches unter Druck, die mit der besagten Rampe (6, 27) verbunden ist,
- Einrichtungen (9, 10, 11) zum Führen der besagten Rampe in einer Drehung um eine vertikale Achse (4), die durch den begrenzten Platz (20) oder in unmittelbarer Nähe dazu verläuft, und
- Einrichtungen (15, 24, 29) zum Antreiben der besagten Rampe (6, 27) in eine Drehung um diese vertikale Achse (4) umfaßt.

2. Vorrichtung nach Anspruch 1, dadurch gekennzeichnet, daß die besagte Rampe (6, 27) bezüglich dieser vertikalen Achse (4) symmetrisch ist.

3. Vorrichtung nach einem der Ansprüche 1 und 2, dadurch gekennzeichnet, daß wenigstens einige (22) der Öffnungen zum Ausstoßen des Gases oder des Gasgemisches unter Druck vertikal zu der besagten Fläche (2) münden.

4. Vorrichtung nach einem der Ansprüche 1 bis 3, dadurch gekennzeichnet, daß wenigstens einige der Öffnungen (15) zum Ausstoßen des Gases oder des Gasgemisches unter Druck schräg zu der besagten Fläche (2) münden.

5. Vorrichtung nach Anspruch 4, dadurch gekennzeichnet, daß wenigstens einige der besagten Öffnungen zum Ausstoßen des Gases oder des Gasgemisches unter Druck, die schräg zu der besagten Fläche (2) münden, nach unten von der vertikalen Achse weg, vorzugsweise unter einem Winkel von höchstens gleich etwa 15° diesbezüglich ausgerichtet sind.

6. Vorrichtung nach einem der Ansprüche 4 und 5, dadurch gekennzeichnet, daß wenigstens einige der besagten Öffnungen (15) zum Ausstoßen des Gases oder des Gasgemisches unter Druck, die schräg zu der besagten Fläche (2) münden, maximal unter etwa 45° bezüglich der Vertikalen und vorzugsweise unter weniger als etwa 20° bezüglich der Vertikalen in Bezug auf eine Umfangsrichtung (16, 17) ausgerichtet sind.

7. Vorrichtung nach Anspruch 6, dadurch gekennzeichnet, daß die Öffnungen (15) zum Ausstoßen des Gases oder des Gasgemisches unter Druck, die schräg zu der besagten Fläche (2) münden, in einer bestimmten Umfangsrichtung (16) in Bezug auf die vertikale Achse (4) ausgerichtet sind.

8. Vorrichtung nach einem der Ansprüche 1 bis 7, dadurch gekennzeichnet, daß die Rampe (27) wenigstens eine weitere Öffnung (24) zum Ausstoßen von Gas oder eines Gasgemisches unter Druck aufweist, die horizontal in einer bestimmten Umfangsrichtung (25) in Bezug auf die vertikale Achse (4) mündet.

9. Vorrichtung nach Anspruch 8, dadurch gekennzeichnet, daß die wenigstens eine Öffnung (24) zum Ausstoßen von Gas oder eines Gasgemisches unter Druck, die horizontal in einer bestimmten Umfangsrichtung (25) mündet, darüber hinaus so weit wie möglich von der vertikalen Achse (4) entfernt ist.

10. Vorrichtung nach einem der Ansprüche 8 und 9, dadurch gekennzeichnet, daß die Rampe (27) zwei derartige Öffnungen (24) zum Ausstoßen von Gas oder eines Gasgemisches unter Druck aufweist, die horizontal in einer bestimmten Umfangsrichtung (25) münden, und die symmetrisch bezüglich der vertikalen Achse (4) angeordnet und diesbezüglich in derselben bestimmten Umfangsrichtung (25) münden.

11. Vorrichtung nach einem der Ansprüche 7 bis 10, dadurch gekennzeichnet, daß die Einrichtungen (15, 24, 29) zum Antreiben der Rampe (6, 27) in eine Drehung um die vertikale Achse die Öffnungen (15, 25) zum Ausstoßen von Gas oder eines Gasgemisches unter Druck umfassen, die in einer bestimmten Umfangsrichtung (16, 25) münden.

12. Vorrichtung nach einem der Ansprüche 1 bis 11, dadurch gekennzeichnet, daß die Einrichtungen (15, 24, 29) zum Antreiben der Rampe (26) in eine Drehung um die vertikale Achse einen Motor (29) umfassen, der kinematisch mit der Rampe (6, 27) verbunden ist.

13. Vorrichtung nach einem der Ansprüche 1 bis 12, dadurch gekennzeichnet, daß die Einrichtungen (9, 10, 11) zum Führen der Rampe in einer Drehung um die vertikale Achse (4) ein koaxiales Rohr (9) zur Verbindung der Rampe (6, 27) mit der Quelle (14) des Gases oder des Gasgemisches unter Druck umfassen.

14. Vorrichtung nach einem der Ansprüche 1 bis 13, dadurch gekennzeichnet, daß sie Vorratseinrichtungen (21) für den Teig umfaßt, die zu der besagten Fläche (2) unmittelbar in der Nähe der vertikalen Achse (4) auf einer Höhe über derjenigen der Rampe (6, 20) münden.

15. Vorrichtung nach Anspruch 14, dadurch gekennzeichnet, daß die Vorratseinrichtungen (21) des Teiges beiderseits der vertikalen Achse (4) zu der besagten Fläche (2) münden.

16. Vorrichtung nach einem der Ansprüche 14 und 15, dadurch gekennzeichnet, daß sie Einrichtungen umfaßt, die die Einrichtungen (15, 24, 29) zum Antreiben der Rampe (6, 7) in eine Drehung um die vertikale Achse (4), die Quelle (14) des Gases oder des Gasgemisches unter Druck und die Vorratseinrichtungen des Teiges in einer Abfolge von Schritten antreiben, die darin bestehen:
- Ablegen des Teiges (19) an dem Platz (20), während die Rampe (6, 27) ruht, und die senkrechte Mündung (21) der Vorratseinrichtungen des Teiges zur Fläche (2) freigibt, während das Ausstossen des Gases oder des Gasgemisches unter Druck unterbrochen ist,
- Herbeiführen einer Drehung der Rampe (6, 27) um die vertikale Achse (4) und Ausstoßen des Gases oder des Gasgemisches unter Druck und
- Unterbrechen der Drehung der Rampe (6, 27) um die vertikale Achse (4) und des Ausstoßens des Gases oder des Gasgemisches unter Druck.
